# EUROPEAN PATENT APPLICATION

(11) **EP 1 770 504 A2**
(43) Date of publication of application: **04.04.2007**
(21) Application number: 06254798.9
(22) Date of filing: 14.09.2006
(51) Int. Cl.: G06F 3/12

(54) **Output request apparatus, output request method, and computer program product**

(30) Priority: 14.09.2005 JP 2005267678; 21.07.2006 JP 2006199693
(71) Applicant: Ricoh Company, Ltd., Tokyo 143-8555 (JP)
(72) Inventor: Sahashi, Yukiko, Tokyo 143-8555 (JP)
(74) Representative: Mounteney, Simon James

(57) **Abstract**

An output request apparatus (100) that issues an output request to an image forming apparatus (151 to 155), includes a display control unit (131) that displays on a display screen a symbol indicating the image forming apparatus (151 to 155) and position information indicating an installation position of the image forming apparatus (151 to 155), an input receiving unit (133) that receives, when the symbol is specified, an input to select the image forming apparatus (151 to 155) to output data, and a transmitting unit (134) that transmits output data generated for the image forming apparatus (151 to 155) to the image forming apparatus (151 to 155) to issue an output request.

## Description

### BACKGROUND OF THE INVENTION

### 1. Field of the Invention

The present invention relates to a technology for requesting an image forming apparatus to output data.

### 2. Description of the Related Art

Recently, printing machines such as a printer are installed in offices, and are present on a network to be accessible from various places. To use such a printer through the network, a drag and drop operation is often performed to initialize the printer and perform printing. For example, when a file is dragged and dropped onto a printer icon, printing of the file is started.

Japanese Patent Application Laid-open No. 2001-337765 discloses a technology in which a print condition is preset for a print icon, and settings for a printer is displayed on a screen by dragging and dropping an icon of a file to be printed onto the print icon. Then, the file is printed under the print condition. With this technology, operation from issuing a print command to checking for settings can be performed by an intuitive operation such as a drag-and-drop operation.

In the conventional technology, however, it is difficult to distinguish printers on different locations, and determine which one corresponds to a printer icon onto which dragged file is dropped. Besides, to perform printing, it is necessary to store, in advance, an Internet protocol (IP) address of a printer to be used and install a printer driver compatible with the printer. If a user does not recognize which printer meets such conditions, as in a place where the user has not visited before, it is difficult for the user to use a printer.

That is, an installation site of a printer specified by a drag-and-drop operation can be found based only on a memory when the user installed the printer. If there are printers of the same type, it is mistakable and can cause confusion.

### SUMMARY OF THE INVENTION

It is an object of the present invention to at least partially solve the problems in the conventional technology.

According to an aspect of the present invention, an output request apparatus that issues an output request to an image forming apparatus, includes a display control unit that displays on a display screen a symbol indicating the image forming apparatus, and position information indicating an installation position of the image forming apparatus, an input receiving unit that receives, when the symbol is specified, an input to select the image forming apparatus to output data, and a transmitting unit that transmits output data generated for the image forming apparatus to the image forming apparatus to issue an output request.

According to another aspect of the present invention, an output request method for issuing an output request to an image forming apparatus, includes displaying a symbol indicating the image forming apparatus, and position information indicating an installation position of the image forming apparatus, receiving, when the symbol is specified, an input to select the image forming apparatus to output data, and transmitting output data generated for the image forming apparatus to the image forming apparatus to issue the output request.

According to still another aspect of the present invention, a computer program product comprising a computer usable medium having computer readable program codes embodied in the medium that when executed implements the above method on a computer.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a block diagram of a print request apparatus according to a first embodiment of the present invention;
Fig. 2 is one example of contents of a printer information database shown in Fig. 1;
Fig. 3 is a schematic for explaining examples of icons displayed on a display device shown in Fig. 1;
Fig. 4 is a flowchart of a print request process performed by the print request apparatus shown in Fig. 1;
Fig. 5 is a schematic for explaining examples of icons on a layout screen displayed on the display device;
Fig. 6 is a schematic for explaining examples of icons displayed on the display device;
Fig. 7 is a block diagram of a print request apparatus according to a third embodiment of the present invention;
Fig. 8 is a schematic for explaining examples of icons on the layout screen displayed on the display device;
Fig. 9A is a flowchart of a print request process performed by the print request apparatus shown in Fig. 7;
Fig. 9B is another flowchart of the print request process (continued from Fig. 9A);
Fig. 10 is a schematic for explaining examples of icons and printer status information displayed on the display device;
Fig. 11 is a flowchart of a printer status display process performed by a print request apparatus according to a fourth embodiment of the present invention;
Fig. 12 is a schematic for explaining examples of the icons and the printer status information on the layout screen displayed on the display device;
Fig. 13 is another schematic for explaining examples of the icons and the printer status information on the layout screen displayed on the display device; and
Fig. 14 is a block diagram of a hardware configuration of the print request apparatus according to the first to the fourth embodiments.

### DETAILED DESCRIPTION OF THE PREFERRED EMBODIMENTS

Exemplary embodiments of the present invention are explained in detail below with reference to the accompanying drawings.

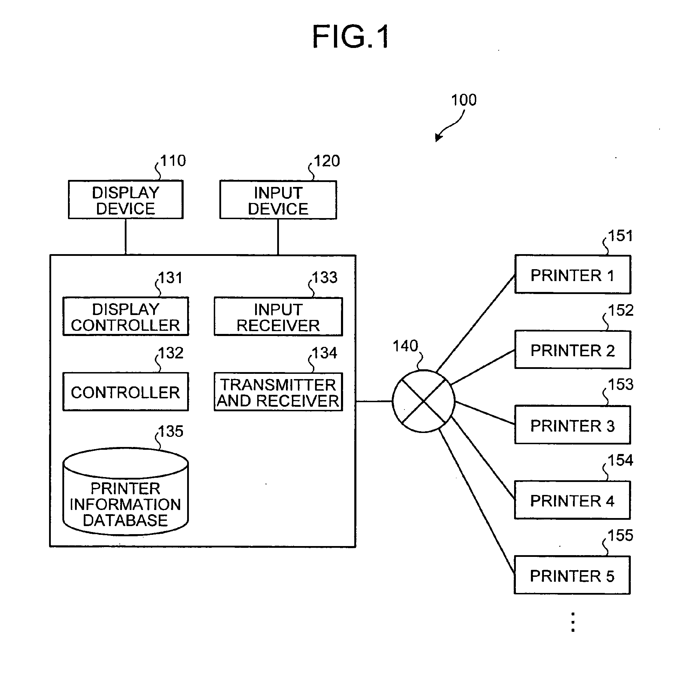

Fig. 1 is a block diagram of a print request apparatus 100 according to a first embodiment of the present invention. The print request apparatus 100 is connected to printers 151 to 155 (image forming apparatuses) via a network 140. While five printers are depicted in Fig. 1, any number of printers can be connected to the print request apparatus 100. Examples of the network 140 include a telephone line, a wireless network, and the Internet.

The printers 151 to 155 are installed in various places, and receive print data and a print request for printing (outputting) from the print request apparatus 100, and print the print data on recording paper or the like according to the print request. In the first embodiment, the image forming apparatus is used as the printer; however, the present invention is not limited thereto, and, for example, a multifunction product with a print function can also be used.

The print request apparatus 100 is connected to a display device 110 and an input device 120, and includes a display controller 131, a controller 132, an input receiver 133, a transmitter and receiver 134, and a printer information database 135.

The display device 110 displays text, images and the like.

The input device 120 is a mouse, a pointing device such as a track ball and a track pad, a keyboard, or the like. A user uses the input device to specify a printer by a drag-and-drop operation, or perform an operation for screen display on the display device 110. The drag-and-drop operation is performed with a mouse or the like, in which an object is dragged and dropped sequentially. Moving a pointer while the mouse button, etc. is kept pressed is referred to as drag, and releasing the mouse button when the pointer is at a desired location is referred to as drop.

The printer information database 135 stores apparatus information, in which icon information, position information, IP addresses, simple Internet protocol (SIP) addresses, etc. of the printers 151 to 155 as destinations, the model of the printers 151 to 155, and other relevant image information such as a display method of the printers 151 to 155 are associated with one another, and is stored in a storage medium such as a hard disk drive (HDD) and a memory. The icon information indicates image file names of icons of the printers 151 to 155, printer ID that uniquely identifies each of the printers 151 to 155. The position information indicates installation positions of the printers 151 to 155 by coordinates or a character string. An icon is displayed on the display screen to indicate a type of data or a processing function in a form of an image or a symbol. In the first embodiment, icons of the printers are displayed on the display device 110; however, the present invention is not limited thereto, and an icon can be displayed with a symbol including character or letter strings that indicate a type of data or a processing function.

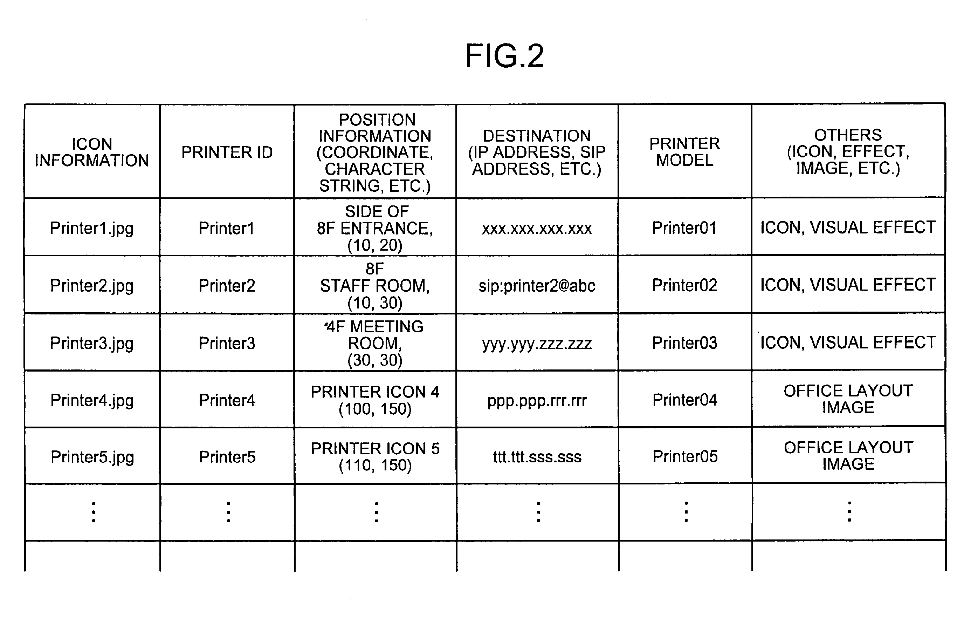

Fig. 2 is one example of contents of the printer information database 135. The printer information database 135 stores therein the icon information of the printers 151 to 155, printer IDs, position information, destinations, printer models, and other relevant image information in association with one another. The printer information database 135 can be another personal computer (PC) connected via the network or provided by services. The apparatus information stored in the printer information database 135 can be input beforehand, or downloaded via the network.

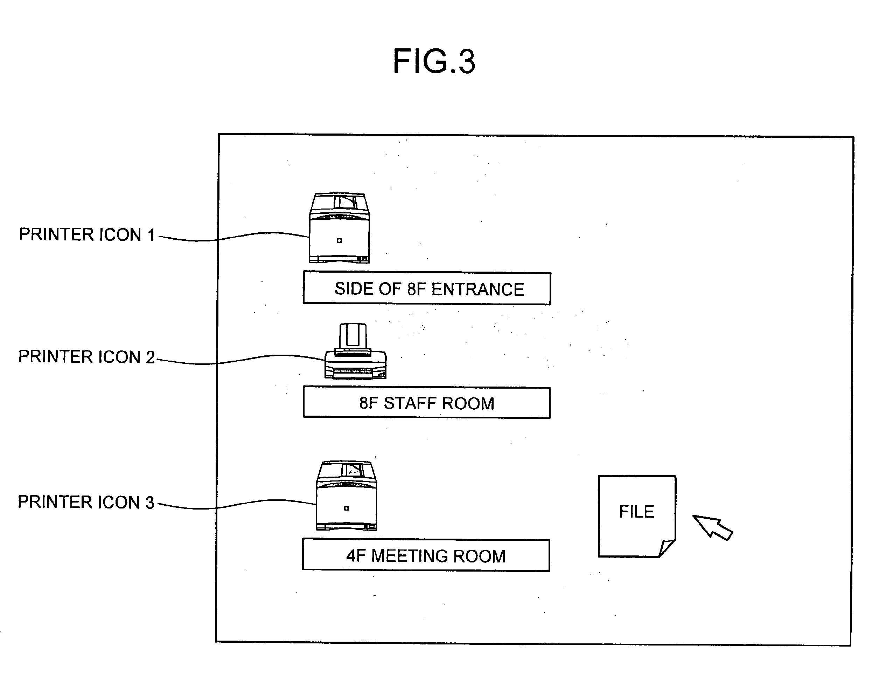

The display controller 131 refers to the printer information database 135 to control display of icons of the printers 151 to 155, a data icon, and the like on the display device 110. The display controller 131 also refers to the printer information database 135 to control display of text information indicating the installation position, i.e., the position of each of the printers 151 to 155, as, for example, "Side of 8F entrance", on the display device 110. Fig. 3 is a schematic for explaining examples of icons displayed on the display device 110. In Fig. 3, printer icons 1 to 3 corresponding to the printers 151 to 153, text information for the printers 151 to 153, and a data icon are displayed on the display device 110 together with a pointer operated by the input device 120.

The input receiver 133 receives an input for the screen displayed on the display device 110 from the user through the input device 120. When the user operates the input device 120 to drag and drop text or an image as a data icon onto any one of the icons of the printers 151 to 153, the input receiver 133 receives the input such as specification of a desired printer for printing and a print request by using the specified printer. One or more printers can be selected. In the first embodiment, the input device 120 is operated to perform a drag-and-drop operation to specify a printer. However, a printer can be specified by other operations as long as the printer to which the print request is issued can be specified.

The controller 132 specifies a printer icon in response to the input received by the input receiver 133, and searches the printer information database 135 by using the icon information of the specified icon as a key. The controller 132 thereby selects the record of the printer, by which the data is to be printed. The printer ID and a destination address are obtained from the selected record. The controller 132 also generates print data from the data dragged by the user with a printer driver corresponding to the selected printer.

The transmitter and receiver 134 transmits the print data generated by the controller 132 to the address of the selected printer, thereby executing the print request received by the input receiver 133.

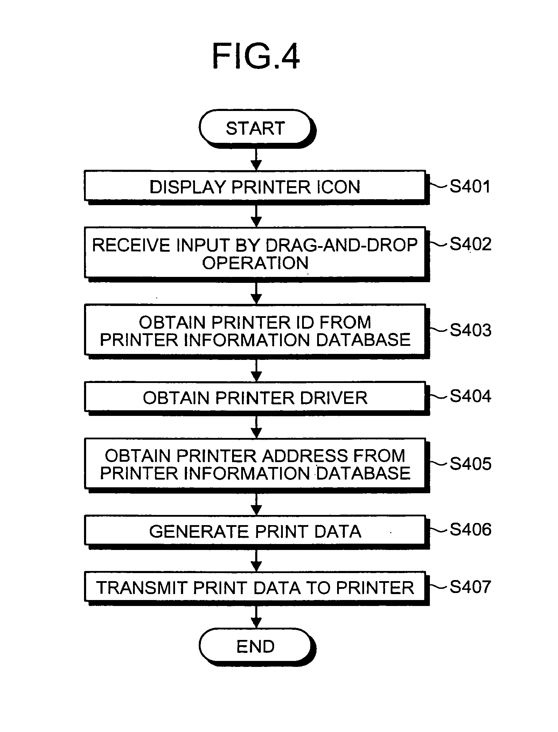

Fig. 4 is a flowchart of a print request process performed by the print request apparatus 100.

First, the display controller 131 displays the icons of the printers 151 to 153 and a data (file) icon on the display device 110 (step S401). Specifically, the display controller 131 reads all records registered in the printer information database 135. The display controller 131 also reads icon information and the position information of the printers from the respective records to display icons specified by the icon information with text information indicating the installation positions of the printers obtained from the position information on the display device 110.

The user drags and drops the data icon onto an icon of any one of the printers by the input device 120, while viewing the screen of the display device 110 to perform input. The input receiver 133 receives the input from the user (step S402).

The controller 132 then specifies a printer icon based on the input received by the input receiver 133, and selects the record of the printer to be used for printing. The controller 132 selects the printer by obtaining the printer ID from the selected record (step S403), thereby obtaining a printer driver compatible with the printer model corresponding to the obtained printer ID (step S404). The controller 132 obtains an address of the printer, which is a destination of the data and the like, corresponding to the obtained printer ID from the printer information database 135 (step S405).

The controller 132 converts the data to be printed by the obtained printer driver to generate print data printable by the selected printer (step S406). The transmitter and receiver 134 transmits the print data generated by the controller 132 to the obtained printer address to issue a print request (step S407). As a result, the data is printed on recording paper or the like by the selected printer.

As described above, according to the first embodiment, the display controller 131 visually displays icons of the printers 151 to 155 and the position information of the printers 151 to 155 by a text message. The input receiver 133 receives input as to a printer selected by dragging and dropping of the icon of data to be printed onto the icon of any one of the printers 151 to 155. The controller 132 generates print data according to the apparatus information of the selected printer, and the transmitter and receiver 134 transmits the print data to the selected printer to issue a print request. Thus, the position information of the printers 151 to 155 are displayed, and, even when the position of a desired printer for printing is not remembered, the printer can be selected without being confused with other printers. Further, special setting is not required, and a printing operation can be easily performed by a simple drag-and-drop operation.
Furthermore, because the position information is displayed clearly and simply by a text message, the position of the printer can be checked at a glance.

In the first embodiment, the printer icon and the text information indicating the installation position of the printer by a text message are displayed on the display device 110 in the print request apparatus 100. However, the printer icon can be displayed on a layout screen of a space where the printer is installed.

In this case, the printer icon is displayed on the layout screen, and the displayed printer icon is stored in the printer information database 135 as indicated by the column of position information, i.e., the installation position of the printer, shown in Fig. 2.

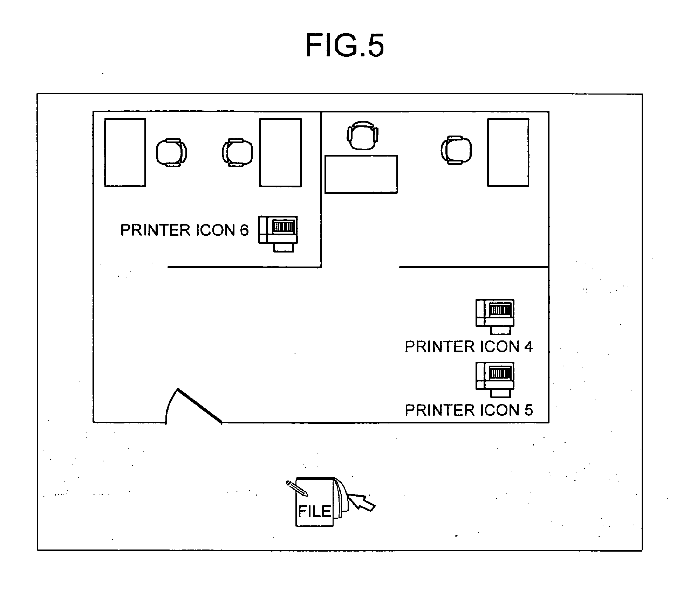

The display controller 131 further controls display of the layout of the space where the printers 151 to 155 are installed, i.e., the layout screen indicating the installation positions of printers and other furniture in a meeting room, a staff room, and the like. Fig. 5 is a schematic for explaining examples of icons on the layout screen displayed on the display device 110. As shown in Fig. 5, a layout screen that indicates the space where the printers are installed is displayed on the display device 110 in a simplified manner. A printer icon 4 corresponding to the printer 154, a printer icon 5 corresponding to the printer 155, a printer icon 6, and a data icon are displayed on the layout screen with a pointer operated by the input device 120. Thus, only by checking the icons on the layout screen, the position information indicating which printer is installed in which room can be ascertained.

As described above, the display controller 131 displays the position information of the printers 151 to 155 with icons on the layout screen. That is, the position information is displayed using an icon on the layout screen in a map format, and the printer position can be checked visually and intuitively. Hence, the user can comprehend a startup screen of a printing service.

The printer icon and the text information indicating the installation position of the printer by a text message are displayed on the display device 110 in the print request apparatus 100. However, according to a second embodiment of the present invention, a current status of the printer is further displayed on the display device in the print request apparatus.

The print request apparatus in the second embodiment has the same configuration as that of the print request apparatus 100, and is explained below with reference to Fig. 1. The print request apparatus 100 is connected to the display device 110 and the input device 120, and includes the display controller 131, the controller 132, the input receiver 133, the transmitter and receiver 134, and the printer information database 135.

The configuration and the functions of the display device 110, the input device 120, the controller 132, the input receiver 133, and the printer information database 135 are essentially the same as described previously in the first embodiment, and a detailed description thereof is not included herein.

The transmitter and receiver 134 transmits the print data generated by the controller 132 to the address of the selected printer, thereby executing a print request received by the input receiver 133. The transmitter and receiver 134 also regularly checks the printers 151 to 155 as to print jobs thereon and whether the power is on, transmits a request signal inquiring the current status thereof, and is informed of the current status by the printers 151 to 155 in response to the request signal. Examples of the current status include being disabled, off-line, in failure, and the like.

The display controller 131 refers to the printer information database 135 to control display of icons of the printers 151 to 155, a data icon, and the like on the display device 110. The display controller 131 also refers to the printer information database 135 to control display of text information indicating the installation positions, i.e., the position information of the printers 151 to 155, indicated by a text message, for example, "Side of 8F entrance", on the display device 110. Further, the display controller 131 controls display of the current status of the printers 151 to 155, for example, "Available", obtained by an inquiry to the printers 151 to 155 from the transmitter and receiver 134 on the display device 110.

Specifically, the display controller 131 controls display of the inquiry results as to the current status of the printers, such as being disabled, off-line indicating that the power is off, out of supply indicating that the printing paper is not replenished, in failure, in printing according to a command from another user. When the printer is in process of printing according to a command from another user, the display controller 131 displays the name of the user who is using the printer, the number of prints of the print data, or the time until the completion of the printing, i.e., waiting time until the printer becomes available.

The display controller 131 displays the current status of the printers 151 to 155 obtained by an inquiry thereto by changing the icon. Specifically, the display controller 131 changes the content of the text information indicating the current status of the printers 151 to 155 according to their status, and displays the text information. The display controller 131 can display the icons of the printers 151 to 155 while changing the image thereof according to the status of the printers 151 to 155. The display controller 131 can also display the icons of the printers 151 to 155 as moving image icons that vary according to the status of the printers 151 to 155. Further, the display controller 131 can emphasize display of the current status of one of the printers 151 to 155 by fading icons other than the icon of the printer. The display controller 131 can also vocally inform the user of the current status of the printers 151 to 155.

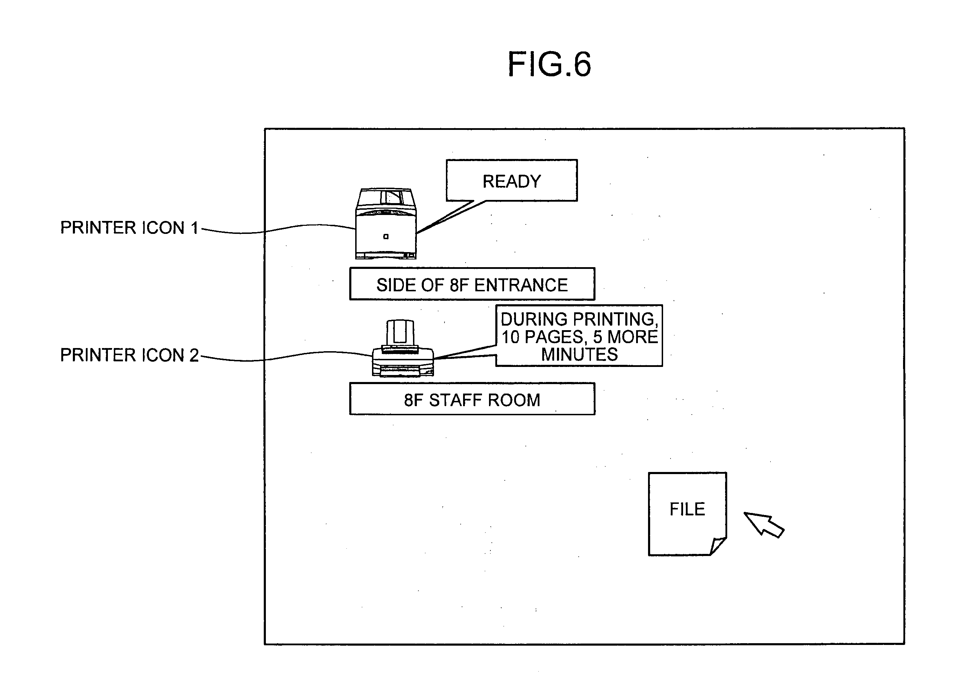

Fig. 6 is a schematic for explaining examples of icons displayed on the display device 110. As shown in Fig. 6, printer icons 1 and 2 corresponding to the respective printers 151 and 152, text information for the printers 151 and 152, current status of the printers 151 and 152, and a data icon are displayed on the display device 110 together with a pointer operated by the input device 120.

The flow of the print request process performed by the print request apparatus according to the second embodiment is basically the same as that in the first embodiment, and therefore, the same explanation is not repeated.

As described above, according to the second embodiment, the transmitter and receiver 134 inquires about the current status to the printers, and the display controller 131 displays the current status of the printers based on the results of the inquiry obtained by the transmitter and receiver 134. The display controller 131 also displays the current status of the printers while changing the icons of the printers based on the results of the inquiry. Thus, a user can acquire the printer status visually before making a print request, which eliminates a useless request, and allows the user to select a printer efficiently and appropriately.

In addition, for example, the power can be turned on when printing is not available because the printer is off-line, printing paper can be supplied when printing is not available due to out of supply, and a failure can be repaired when the printer is in failure. In this manner, a measure can be taken, if necessary, before a print request is made. Moreover, to avoid mixing of prints of the user with prints of another user, the printer can be selected after completion of printing by another user, and hence the printer can be selected efficiently and appropriately.

The print request apparatus 100 transmits print data to a printer selected by the user to issue a print request. When the printer is not available, information on another printer that can be selected and used for printing (hereinafter, "alternate printer"), i.e., whether the alternate printer is located near the user and, if any, whether the alternate printer can perform printing immediately, cannot be obtained. Consequently, it is sometimes difficult to specify another appropriate printer for printing. To overcome such a problem, according to a third embodiment of the present invention, when a printer selected by the user is not available for printing, another printer is selected.

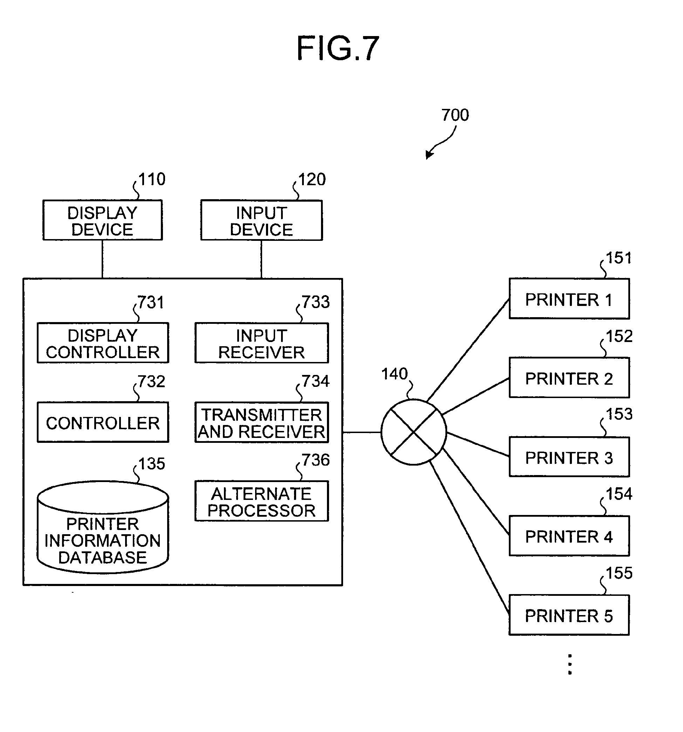

Fig. 7 is a block diagram of a print request apparatus 700 according to the third embodiment. The print request apparatus 700 is connected to the printers 151 to 155 (image forming apparatuses) via the network 140. While five printers are depicted in Fig. 7, any number of printers can be connected to the print request apparatus 700.

The configuration and the functions of the network 140 and the printers 151 to 155 are essentially the same as described previously in the first embodiment, and a detailed description thereof is not included herein.

The print request apparatus 700 is connected to the display device 110 and the input device 120, and includes a display controller 731, a controller 732, an input receiver 733, a transmitter and receiver 734, an alternate processor 736, and the printer information database 135.

The configuration and the functions of the display device 110, the input device 120, and the printer information database 135 are essentially the same as described previously in the first embodiment, and a detailed description thereof is not included herein.

The display controller 731 refers to the printer information database 135 to control display of icons of the printers 151 to 155, a data icon, and the like on the display device 110. The display controller 731 also refers to the printer information database 135 to control display of layout of a space where the printers 151 to 155 are installed, i.e., a layout screen indicating the installation positions of printers and other furniture in a meeting room, a staff room, and the like, on the display device 110. When a printer selected by the user is not available, the display controller 731 displays this information on the display device 110, and displays a pop-up dialog box to inquire whether to perform printing by another printer (hereinafter, "alternate printing") to continue printing.

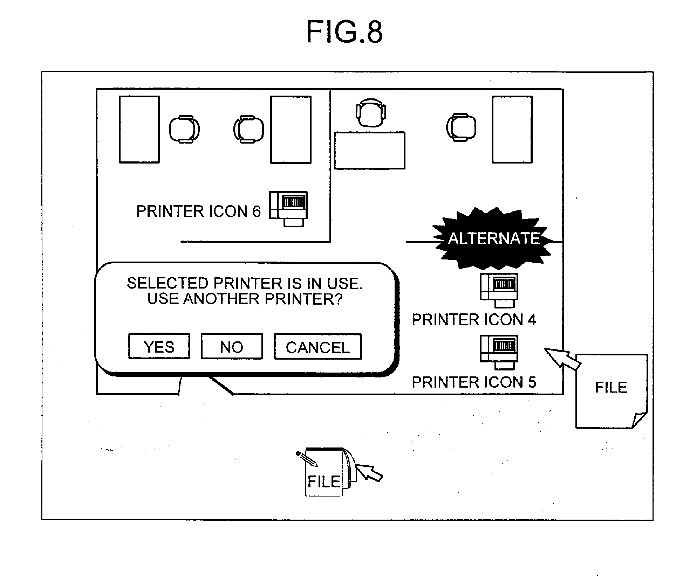

Fig. 8 is a schematic for explaining examples of icons on the layout screen displayed on the display device 110. As shown in Fig. 8, a layout screen indicating the space where the printers are installed is displayed on the display device 110 in a simplified manner. A printer icon 4 corresponding to the printer 154, a printer icon 5 corresponding to the printer 155, a printer icon 6, and a data icon are displayed on the layout screen with a pointer operated by the input device 120. Thus, only by checking the icons on the layout screen, the position information indicating which printer is installed in which room can be ascertained.

With reference to Fig. 8, when a printer selected by the user is not available, this information is displayed in a pop-up dialog box that inquires whether to perform printing by another printer by, for example, a message such as "Selected printer is currently in use. Use another printer?".

The input receiver 733 receives an input for the screen displayed on the display device 110 from the user through the input device 120. When the user operates the input device 120 to drag and drop text or an image as a data icon onto the icon of any one of the printers 151 to 155, the input receiver 733 receives the input such as specification of a desired printer for printing and a print request by using the specified printer. The input receiver 733 also receives an input for the pop-up dialog box displayed on the display device 110, for example, the pop-up dialog box inquiring whether to perform alternate printing.

The controller 732 specifies a printer icon in response to the input received by the input receiver 733, and searches the printer information database 135 by using the icon information of the specified icon as a key. The controller 732 thereby selects the record of the printer to be used for printing the data. The printer ID and a destination address are obtained from the selected record. The controller 732 also generates print data from the data dragged by the user with a printer driver corresponding to the selected printer. Further, the controller 732 transmits a request signal inquiring whether the printer is available to the printer selected by the user or the alternate processor 736, described later, and receives an inquiry result in response thereto. Thus, the controller 732 determines whether the printer is currently available for printing.

The transmitter and receiver 734 transmits the print data generated by the controller 732 to the address of the printer selected by the user or the alternate processor 736, thereby executing the print request received by the input receiver 733.

When it is determined that the printer selected by the user is not available, the alternate processor 736 refers to coordinates from the position information in the printer information database 135 to reselect a printer with coordinates closest to the coordinates of the initially selected printer from other printers within a certain range. The selected printer is not available, for example, when the selected printer is being disabled, currently performing mass printing, or in failure.

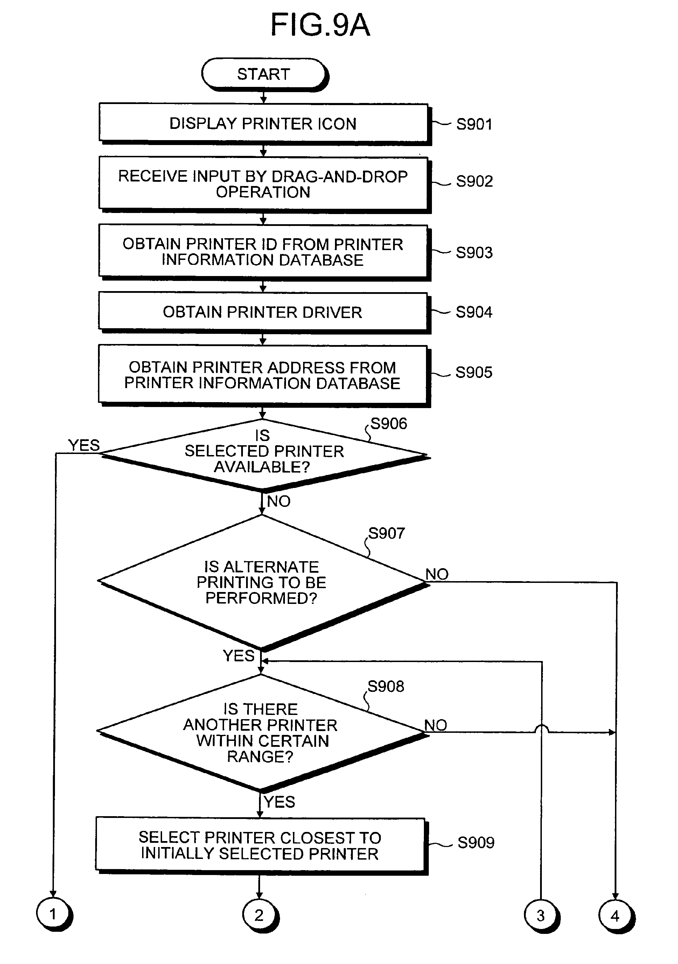

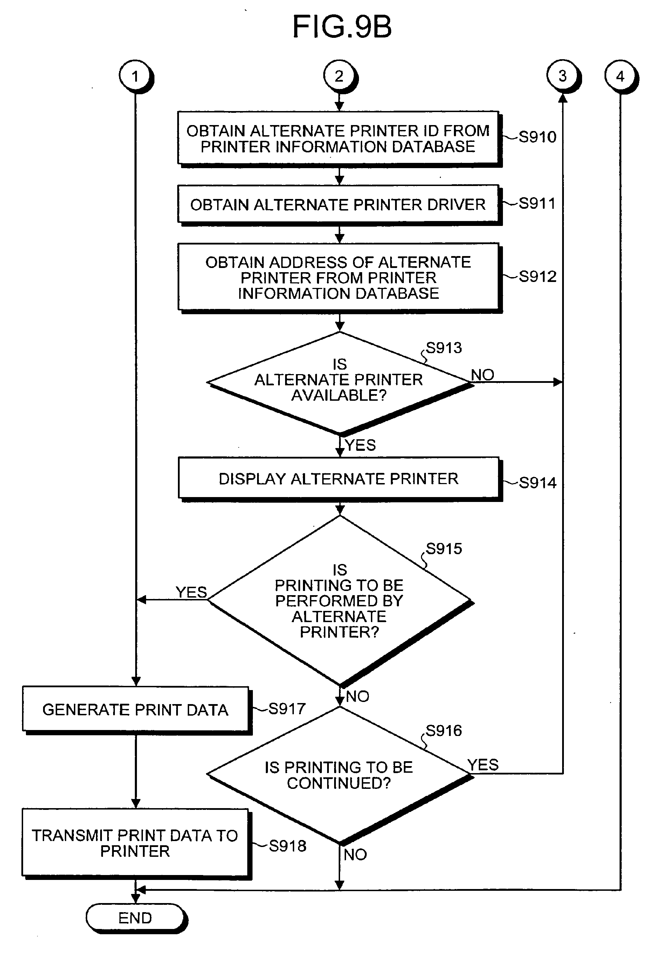

Figs. 9A and 9B are flowcharts of a print request process performed by the print request apparatus 700.

First, the display controller 731 displays the layout screen in which the printers 154 and 155 are arranged on the display device 110, and displays the icons of the printers 154 and 155 and a data (file) icon on the layout screen (step S901). The specific display method is the same as in the first embodiment.

The user drags and drops the data icon onto an icon of any one of the printers by the input device 120, while viewing the screen of the display device 110 to perform input. The input receiver 733 receives the input from the user (step S902).

The controller 732 then specifies a printer icon based on the input received by the input receiver 733, and selects the record of the printer to be used for printing. The controller 732 selects the printer by obtaining the printer ID from the selected record (step S903), thereby obtaining a printer driver compatible with the printer model corresponding to the obtained printer ID (step S904). The controller 732 obtains an address of the printer, which is a destination of the data and the like, corresponding to the obtained printer ID from the printer information database 135 (step S905).

The controller 732 determines whether the selected printer is available (step S906). Specifically, the controller 732 transmits a request signal inquiring whether the printer is available to the printer selected by the user, and receives an inquiry result in response thereto, and determines whether the printer is currently available for printing.

When the controller 732 determines that the selected printer is not available (No at step S906), the alternate processor 736 determines whether an input for alternate printing by another printer than the printer selected by the user has been received (step S907). When the input for alternate printing has not been received (No at step S907), printing is not to be continued, and the process ends.

On the other hand, having determined that the input for alternate printing has been received (Yes at step S907), the alternate processor 736 determines whether another printer is installed within a predetermined range (step S908). Specifically, the alternate processor 736 refers to coordinates from the position information in the printer information database 135 to reselect a printer with coordinates closest to the coordinates of the initially selected printer. When the alternate processor 736 determines that another printer is not installed in the predetermined range (No at step S908) and there is no printer to perform alternate printing, printing cannot be continued, and the process ends.

On the other hand, when another printers is installed in the predetermined range (Yes at step S908), the alternate processor 736 reselects a printer physically closest to the printer initially selected by the user (step S909).

The controller 732 then obtains the printer ID corresponding to the icon information of the reselected printer from the printer information database 135 (step S910), thereby obtaining a printer driver compatible with the printer model of the alternate printer corresponding to the obtained printer ID (step S911). The controller 732 obtains an address of the alternate printer, which is a destination of the data and the like, corresponding to the obtained printer ID from the printer information database 135 (step S912).

The controller 732 then determines whether the alternate printer is available (step S913). The determination is performed in the same manner as at step S906.

When the controller 732 determines that the alternate printer is not available (No at step S913), the process returns to step S908, at which the alternate processor 736 determines whether another printer is installed in the predetermined range.

On the other hand, when the alternate printer is available (Yes at step S913), the display controller 731 emphasizes and displays the alternate printer on the display device 110 (step S914). Specifically, the emphasized-display of the icon of the alternate printer is performed in such a manner as, for example, that the icon of the alternate printer is displayed larger than other printer icons, the icon of the alternate printer is displayed as a moving image icon, or other printer icons are faded. The information of the alternate printer can be emphasized by vocal information.

The alternate processor 736 then determines whether an input for alternate printing by the alternate printer displayed by the display controller 731 has been received (step S915). When the input for alternate printing has not been received (No at step S915), the alternate processor 736 determines whether an input indicating that the printing process is to be continued has been received (step S916).

When the input for continuation of printing has been received (Yes at step S916), the process returns to step S908, at which the alternate processor 736 determines whether another printer is installed in the predetermined range. On the other hand, when the input for continuation of printing has not been received (No at step S916), the process ends.

When the alternate processor 736 determines that the input for alternate printing has been received (Yes at step S915), the controller 732 converts the data to be printed by the obtained printer driver to generate print data printable by the alternate printer (step S917). The transmitter and receiver 734 transmits the print data generated by the controller 732 to the obtained printer address to issue a print request (step S918). Accordingly, the alternate printer prints the data on recording paper or the like.

When the process returns to step S906, and the controller 732 determines that the selected printer is available (Yes at step S906), the controller 732 converts the data to be printed by the obtained printer driver to generate print data printable by the selected printer (step S917). The transmitter and receiver 734 transmits the print data generated by the controller 732 to the obtained printer address to issue a print request (step S918). Accordingly, the selected printer prints the data on recording paper or the like.

As described above, according to the third embodiment, when the selected printer, to which the print data is transmitted by the transmitter and receiver 734, is not available, the alternate processor 736 performs a different process instead of the current process, i.e., reselects another printer than the selected printer to execute a print request. Further, the icon of the other printer reselected by the display controller 731 is emphasized and displayed. Therefore, even if the selected printer is not available, another printer is reselected, which allows the user to easily proceed to the next step, and enables continuous processing without interruption. Thus, printing, the initial object, can be achieved. Moreover, because the icon is emphasized, the reselected alternate printer can be checked at a glance.

In the first to the third embodiments, the user operates the input device to drag and drop the data icon onto a printer icon to specify a corresponding printer, and a print request is executed on the printer selected by the user. However, a print setup screen can be displayed on the display device via a drag-and-drop operation.

The print request apparatus 100 transmits the print data to the printer selected by the user to execute a print request. Besides, a print request apparatus in a fourth embodiment transmits the print data, and thereafter, receives information indicating the status of the selected printer.

The process performed by the print request apparatus in the fourth embodiment is performed after transmission of the print data previously described in the first embodiment. The print request apparatus in the fourth embodiment is in many respects similar to the print request apparatus 100, and only differences from the first embodiment is explained with reference to Fig. 1.

The transmitter and receiver 134 has the following functions in addition to those described in the first embodiment. That is, when the status of the selected printer (the printer having received the print data and the print request from the print request apparatus 100) has changed, the transmitter and receiver 134 receives printer status information indicating the current status of the selected from the printer. Specific examples of the change in the printer status include a change from a state of receiving print data to a state of printing the print data, and a change from a state of printing print data to a state of an error. The printer status information indicates that the status of the selected printer has changed, and, for example, that the print data and the like has been received, the print data is being printed, an error has occurred, printing of the print data has finished, or remaining time before completion of printing.

The input receiver 133 has the following functions in addition to those described in the first embodiment. That is, when the user operates the input device 120 on a screen for initial setting or the like, the input receiver 133 receives setting on whether the printer status information received by the transmitter and receiver 134 is to be displayed on the display device 110. The input receiver 133 then stores setting for displaying or not displaying the printer status information in a storage unit (not shown).

The controller 132 has the following functions in addition to those described in the first embodiment. Upon reception of the printer status information from the selected printer, the controller 132 determines whether the display setting for the printer status information is stored in the storage unit (not shown).

The display controller 131 has the following functions in addition to those described in the first embodiment. That is, when the controller 132 determines that the display setting for the printer status information is stored, the display controller 131 displays a text message indicating the printer status on the display device 110, together with a graphic pointing to the icon of the selected printer.

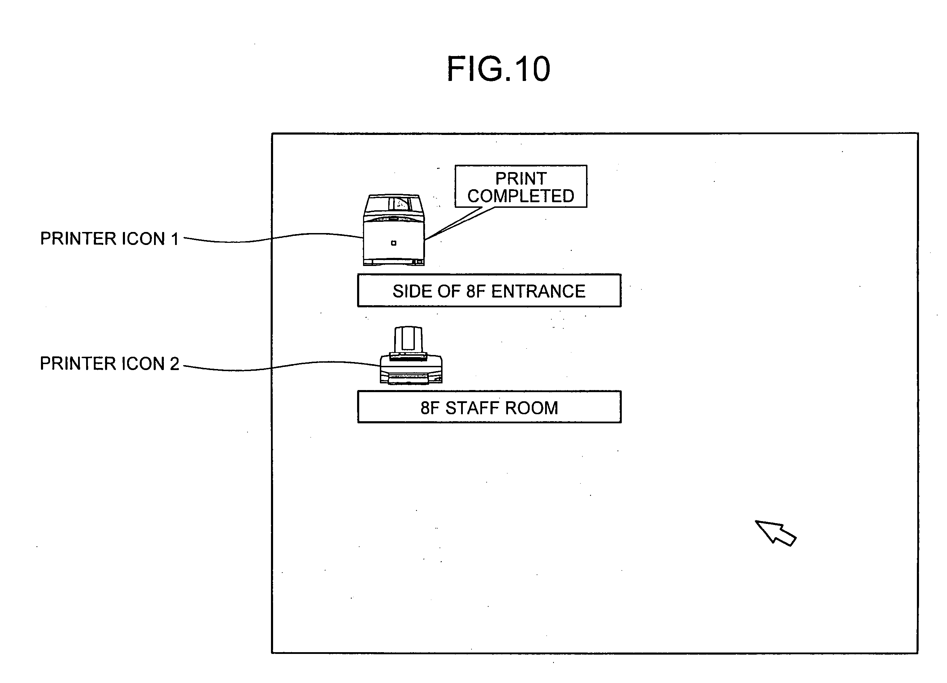

Fig. 10 is a schematic for explaining examples of icons and printer status information displayed on the display device 110. As shown in Fig. 10, printer icons 1 and 2 corresponding to the printers 151 and 152, and text information indicating the installation positions of the printers 151 and 152 by a text message are displayed on the display device 110. Further, text information on the printer status, "Print completed" indicating that printing by the printer 151 (selected printer) is complete is displayed together with a balloon pointing to the icon of the printer 151 and a pointer operated by the input device 120.

Having received print data and a print request, the printers 151 to 155 print out the received print data, and, when the printer status has changed, transmit the printer status information to the print request apparatus, which has transmitted the print request.

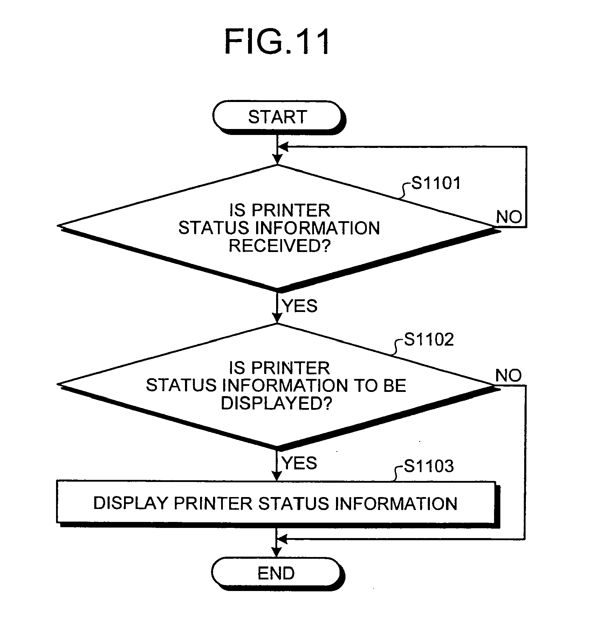

Fig. 11 is a flowchart of a printer status display process performed by the print request apparatus in the fourth embodiment.

After issuing a print request by transmitting the print data to the address of the selected printer (step S407 in Fig. 4), the transmitter and receiver 134 enters in wait mode waiting for the printer status information from the selected printer (step S1101). If the printer status information is not received from the selected printer (No at step S1101), the transmitter and receiver 134 stays in wait mode.

On the other hand, if the transmitter and receiver 134 has received the printer status information from the selected printer (Yes at step S1101), the controller 132 refers to the storage unit (not shown) to determine whether the setting for displaying the printer status information is stored beforehand (step S1102). If the setting for displaying the printer status information is not stored, i.e., setting for not displaying the printer status information is stored (No step at S1102), the controller 132 terminates the process without displaying the printer status information.

On the other hand, if the setting for displaying the printer status information is stored (Yes at step S1102), the display controller 131 displays a text message indicating the printer status together with the icon of the selected printer on the display device 110 (step S1103).

As described above, according to the fourth embodiment, when the printer status information indicating the status of the selected printer is received after the transmitter and receiver 134 transmits print data, and if the setting for displaying the printer status information is stored, the display controller 131 displays the received printer status information on the display device 110 together with a graphic pointing to the icon of the selected printer. Therefore, the user can acquire the status of the printer after making a print request while checking the position of the selected printer, and also check the completion of printing by the selected printer. Thus, when printing is interrupted, the user can take an immediate measure. Moreover, the printer status can be displayed only when it is necessary to check the status of the printer after the print request is made.

In the fourth embodiment, the printer status information is displayed as a text message with the icon of a printer. However, as explained in the first embodiment, the printer status information can be displayed on the layout screen. In other words, the printer status information can be displayed while indicating the icon of a printer on the layout screen of the space where the printers are installed.

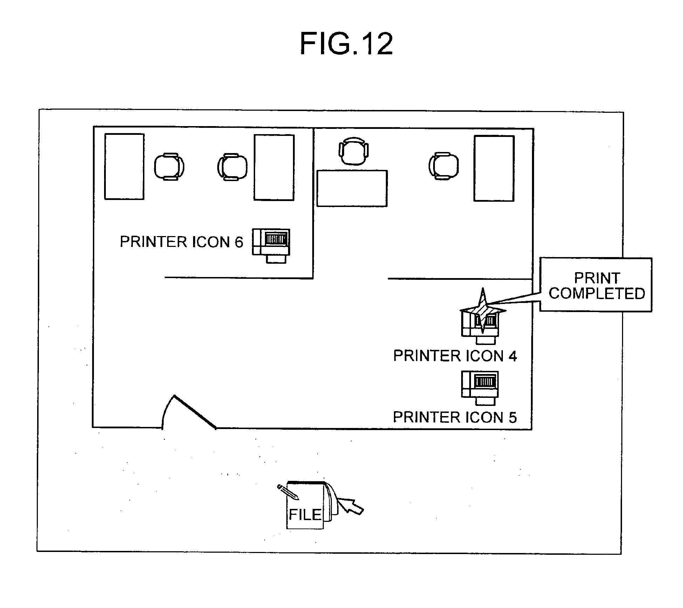

Fig. 12 is a schematic for explaining examples of icons and printer status information on the layout screen displayed on the display device 110. As shown in Fig. 12, the layout screen indicating the space where the printers are installed is displayed on the display device 110 in a simplified manner. A printer icon 4 corresponding to the printer 154, a printer icon 5 corresponding to the printer 155, a printer icon 6, and a data icon are displayed on the layout screen with a pointer operated by the input device 120. Printer status information, "Print completed", indicating that printing by the selected printer (the printer icon 4) is complete is displayed while indicating the printer icon 4.

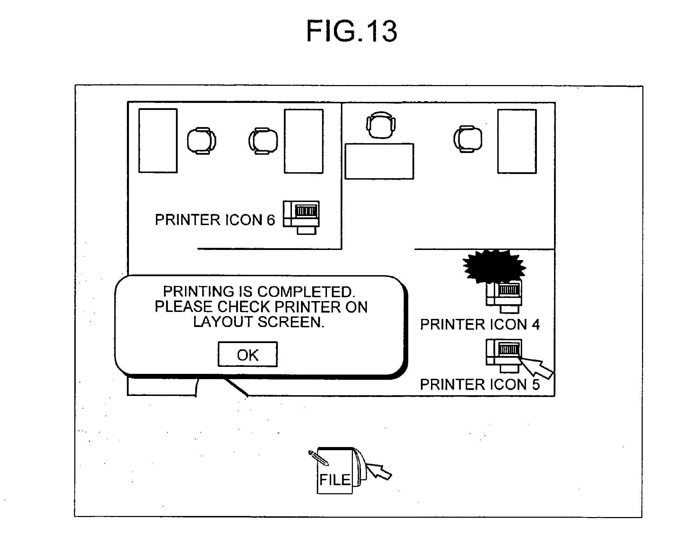

Besides, a pop-up dialog box indicating the printer status information can be displayed on the layout screen similar to that of Fig. 12. Fig. 13 is a schematic for explaining examples of icons and printer status information on the layout screen displayed on the display device 110. As shown in Fig. 13, the layout screen, the printer icon 4, the printer icon 5, the printer icon 6, and the data icon are displayed, as in Fig. 12, on the display device 110. In addition, a pop-up dialog box of the printer status information, "Printing is completed. Please check the printer on the layout screen.", indicating that printing by the selected printer (the printer icon 4) is complete is displayed. When the user clicks OK in the pop-up dialog box, the pop-up dialog box disappears, and the position of the selected printer can be checked.

Thus, the printer status information is displayed on the display device 110 together with the text information indicating the installation position or position information of the selected printer on the layout screen. Accordingly, the position and the status of the selected printer can be checked on the same display screen.

In the fourth embodiment, the printer status information indicates that printing of print data by a selected printer is complete. However, other types of printer status information can also be displayed. For example, the printer status information can indicate that the print data or the like has been received, the print data is being printed, an error has occurred, and remaining time before compression of printing.

In the fourth embodiment, the print request apparatus receives setting on whether to display the printer status information on the display device 110. The print request apparatus, however, can store in the storage unit setting for displaying only particular printer status information, for example, an error has occurred in the selected printer.

Further, in the fourth embodiment, when the status of the printer has changed, the printer status information is transmitted to the print request apparatus, and at step S1101 in Fig. 11, the print request apparatus waits for the printer status information from the printer. However, the present invention is not limited thereto. For example, the print request apparatus can send at regular intervals a notification command instructing the printer, to which the print request has been issued, to notify the current status. Based on the current status received in response to the notification command, the print request apparatus can determine whether the status of the printer has changed. In this case, even if the printer does not have the function of transmitting the printer status information to the print request apparatus when the printer status has changed, the print request apparatus can acquire the printer status change.

While the process performed by the print request apparatus of the fourth embodiment is performed after transmission of the print data in the first embodiment, it can be also performed after transmission of the print data in second and third embodiments.

In the first to the fourth embodiments, the present invention is applied to a print request for one of a plurality of printers. However, the present invention is not limited thereto, and can be applied to, for example, operation relating to positions of equipment such as a copier, an inkjet printer and a facsimile machine installed in various places, obtaining information of the equipment and the like, and proposing alternate equipment other than specified equipment.

While the print request apparatus that issues a print request to the printer is explained in the first to the fourth embodiments, the present invention is not limited thereto, and is applicable to an apparatus that receives an input from a user and issues a request according to the input.

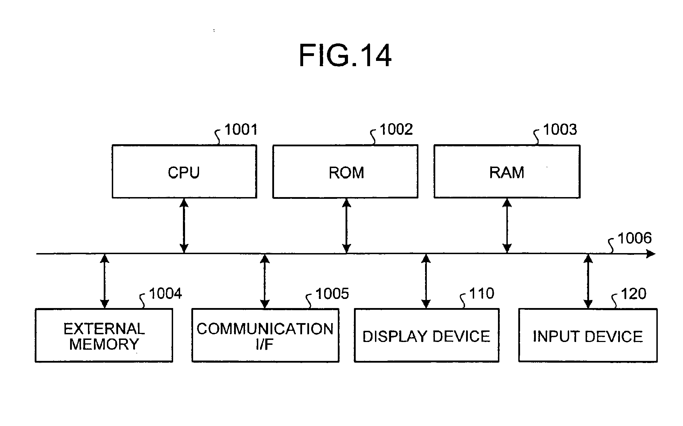

Fig. 14 is a block diagram of a hardware configuration of the print request apparatus according to the first to the fourth embodiments. The print request apparatus includes a control unit such as a central processing unit (CPU) 1001, a memory such as a read only memory (ROM) 1002 and a random access memory (RAM) 1003, an external memory 1004 such as an HDD and a compact disk (CD) drive, a display device 110, the input device 120 such as a keyboard and a mouse, a communication interface (I/F) 1005, and a bus 1006 for connecting the units. That is, the print request apparatus has a hardware configuration of a general computer.

A computer program (hereinafter, "print request program") executed by the print request apparatus is stored in a computer readable recording medium, such as a CD-ROM, a flexible disk (FD), a CD recordable (CD-R), or a digital versatile disk (DVD), as a file in an executable format.

The print request program can be stored on a computer connected to the print request apparatus via a network such as the Internet, and downloaded via the network. Further, the print request program can be provided or distributed via the network such as the Internet, or can be previously stored in the ROM 1002 or the like.

The print request program is executed on a computer to realize the same function as the display controller, the input receiver, the controller, and the transmitter and receiver. The CPU 1001 reads out the print request program from the recording medium, etc., and executes it. The print request program is loaded into the main storage unit, and the display controller, the input receiver, the controller, and the transmitter and receiver are implemented in the main storage unit.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. An output request apparatus (100) that issues an output request to an image forming apparatus (151 to 155), the output request apparatus (100) comprising:
a display control unit (131) that displays on a display screen a symbol indicating the image forming apparatus (151 to 155), and position information indicating an installation position of the image forming apparatus (151 to 155);
an input receiving unit (133) that receives, when the symbol is specified, an input to select the image forming apparatus (151 to 155) to output data; and
a transmitting unit (134) that transmits output data generated for the image forming apparatus (151 to 155) to the image forming apparatus (151 to 155) to issue an output request.

2. An output request apparatus (100) according to claim 1, further comprising:
a storage unit (135) that stores therein apparatus information on the image forming apparatus (151 to 155) associated with the symbol and the position information, wherein
the display control unit (131) refers to the apparatus information to display the symbol of the image forming apparatus (151 to 155) with the position information on the display screen.

3. An output request apparatus (100) according to claim 1, further comprising a control unit (132) that generates the output data corresponding to the image forming apparatus (151 to 155) from the data to be output based on the apparatus information on the image forming apparatus (151 to 155).

4. An output request apparatus (100) according to claim 1, wherein the display control unit (131) displays the position information by a text message.

5. An output request apparatus (100) according to claim 1, wherein the display control unit (131) displays a layout screen indicating an installation space, and indicates the position information by the symbol on the layout screen.

6. An output request apparatus (100) according to claim 1, wherein
the transmitting unit (134) inquires the image forming apparatus (151 to 155) about current status thereof, and
the display control unit (131) displays the current status of the image forming apparatus (151 to 155) based on a result of inquiry.

7. An output request apparatus (100) according to claim 6, wherein the display control unit (131) displays the current status of the image forming apparatus (151 to 155) by changing the symbol thereof based on the result of inquiry.

8. An output request apparatus (700) according to claim 6, further comprising an alternate processing unit (736) that performs alternate processing when a first image forming apparatus (151 to 155), to which the output data has been transmitted, is not available.

9. An output request apparatus (700) according to claim 8, wherein, in the alternate processing, the alternate processing unit (736) selects a second image forming apparatus (151 to 155) to reissue the output request.

10. An output request apparatus (700) according to claim 9, wherein the display control unit (731) emphasizes and displays a symbol of the second image forming apparatus (151 to 155).

11. An output request apparatus (100) according to claim 1, further comprising a receiving unit (134) that receives, after the output request is issued, status information indicating current status of the image forming apparatus (151 to 155) from the image forming apparatus (151 to 155), wherein
the display control unit (131) displays the status information on the display screen.

12. An output request apparatus (100) according to claim 11, wherein
the input receiving unit (133) receives setting on whether to display the status information on the display screen,
the control unit (132) determines whether the setting indicates to display or not to display the status information, and
the display control unit (131) displays the status information on the display screen when the setting indicates to display the status information.

13. An output request apparatus (100) according to claim 12, wherein the display control unit (131) displays the status information on the display screen together with a graphic pointing to the symbol of the image forming apparatus (151 to 155).

14. An output request method for issuing an output request to an image forming apparatus, the output request method comprising:
displaying a symbol indicating the image forming apparatus, and position information indicating an installation position of the image forming apparatus;
receiving, when the symbol is specified, an input to select the image forming apparatus to output data; and
transmitting output data generated for the image forming apparatus to the image forming apparatus to issue the output request.

15. A computer program product comprising a computer usable medium having computer readable program codes, for issuing an output request to an image forming apparatus, embodied in the medium that when executed causes a computer to execute:
displaying a symbol indicating the image forming apparatus, and position information indicating an installation position of the image forming apparatus;
receiving, when the symbol is specified, an input to select the image forming apparatus to output data; and
transmitting output data generated for the image forming apparatus to the image forming apparatus to issue the output request.
